# EUROPEAN PATENT APPLICATION

(11) **EP 4 057 777 A1**
(43) Date of publication of application: **14.09.2022**
(21) Application number: 20883987.8
(22) Date of filing: 29.09.2020
(51) Int. Cl.: H05B 6/06, H05B 6/12, H02J 50/90, H02J 50/80, G06K 19/07, G06K 7/10, H04W 4/80

(54) **WPT COOKTOP DEVICE AND OPERATION METHOD FOR SAME**

(30) Priority: 05.11.2019 KR 20190140414
(71) Applicant: LG Electronics Inc., SEOUL 07336 (KR)
(72) Inventor: KIM, Gwang Rok, Seoul 08592 (KR); PARK, Seung Je, Seoul 08592 (KR)
(74) Representative: Ter Meer Steinmeister & Partner
(86) International application number: PCT/KR2020/013393
(87) International publication number: WO 2021/091087

(57) **Abstract**

A wireless power transfer (WPT) cooktop device (200) according to the present invention includes at least one inductive coupling element (270) including a wire coil that generates a magnetic field when a current is applied, an NFC reader (202) which is positioned in correspondence to the inductive coupling element (270), recognizes a near field communication (NFC) tag (102) of a small electric appliance (100), and reads information pertaining to the small electric appliance (100) from the NFC tag (102), and a controller (250) which receives the information pertaining to the small electric appliance (100) from the NFC reader (202), identifies the position of the small electric appliance (100) and the small electric appliance (100) on the basis of the information pertaining to the small electric appliance (100), transmits wireless power to the small electric appliance (100) through the inductive coupling element (270) corresponding to the identified position, and turns off the NFC reader (202) when transmitting the wireless power to the small electric appliance (100).

## Description

### Technical Field

The present disclosure relates to a WPT cooktop device and an operation method for the same.

### Background Art

Recently, electronic products using a wireless power transfer (WPT) technology have been developed. Wireless power transfer technology is a technology for wirelessly transferring power between a power source and an electronic device. As an example, wireless power transfer technology allows you to charge the battery of a wireless terminal, such as a smartphone or tablet, by simply placing the wireless terminal on a wireless charging pad, thereby providing greater mobility, convenience, and safety compared to a wired charging environment in which an existing wired charging connector is used. Wireless power transfer technology is expected to replace an existing wired power transmission environment in various fields such as electric vehicles, various wearable devices such as Bluetooth earphones and 3D glasses, home appliances, furniture, underground facilities, buildings, medical devices, robots, and leisure.

A wireless power transfer system may be composed of a wireless power transmission device for supplying electric energy in a wireless power transfer method, and a wireless power receiver for receiving electric energy wirelessly supplied from the wireless power transmission device and supplying power to a power receiving device such as a battery cell.

Wireless power transfer technology includes various methods such as a method of transferring power through magnetic coupling, a method of transferring power through radio frequency (RF), a method of transferring power through microwaves, and a method of transferring power through ultrasonic waves.

Such a wireless power transfer technology is being applied to a small electric appliance in addition to wireless charging of a wireless terminal.

A wireless power technology is mainly divided into two categories such as a short distance and a long distance. In a short distance or non-radiative technology, power is generally transmitted over a short distance by a magnetic field using inductive coupling between coils of wire. Inductive coupling is the most widely used wireless technology.

Meanwhile, a cooktop device applies an induced current to a cookware by employing an electromagnetic induction method and can generate heat in the cookware.

Such a cooktop device can transfer power even to a small electric appliance which can receive power through inductive coupling in a wireless power technology. When the cookware is placed on a top plate, such a cooktop device applies an induced current to the cookware and transfers wireless power to the small electric appliance. When the small electric appliance is placed on the top plate, the cooktop device communicates with the small electric appliance to transfer and receive data to and from the small electric appliance. In this case, the small electric appliance transfers a control signal to the cooktop device, and the cooktop device can control the amount of power to be transmitted according to the control signal.

For example, the small electric appliance can communicate with the cooktop device by using an NFC communication method or a ZigBee communication method.

In a case in which the NFC communication method is used, when the cooktop device transfers high voltage power to the small electric appliance, magnetic field interference occurs in an NFC antenna, thereby reducing communication performance.

Specifically, wireless power transfer is a technology of transferring energy through a magnetic induction method, and NFC communication is also a technology of transferring and receiving data by the magnetic induction method, thereby generating interference with each other. Accordingly, when high voltage power is transmitted to the small electric appliance, NFC communication is unstable or blocked.

In addition, in a case in which the ZigBee communication method is used, when the cooktop device has a plurality of heating areas, the small electric appliance may not communicate with a ZigBee communication unit corresponding to a heating area at which the small electric appliance is located. Since the communication distance of the ZigBee communication unit is 10 to 100 meters, the small electric appliance may communicate with a ZigBee communication unit of another heating area instead of the ZigBee communication unit of the heating area in which the small electric appliance is located (hereinafter, referred to as "a pairing error").

Accordingly, the prior cooktop device is required to resolve magnetic interference or a pairing error to communicate with a small electric appliance.

### Disclosure

### Technical Problem

The present disclosure is intended to propose a WPT cooktop device and an operation method for the same which solve the problem of interference in NFC communication generated due to a magnetic field generated by wireless power transmission during NFC communication.

The present disclosure is intended to propose a WPT cooktop device and an operation method for the same which solve the problem of a pairing error during ZigBee communication.

The present disclosure is intended to propose a WPT cooktop device and an operation method for the same in which communication can be efficiently performed at low cost.

The objectives of the present disclosure are not limited to the objectives mentioned above, and, other objectives not mentioned will be clearly understood by those skilled in the art to which the present disclosure belongs from the following description.

### Technical Solution

According to an embodiment, a wireless power transfer (WPT) cooktop device includes: at least one inductive coupling element comprising coils of wire which generate a magnetic field when a current is applied thereto; an NFC reader which is located in correspondence to the inductive coupling element, recognizes a near field communication (NFC) tag of a small electric appliance, and reads information related to the small electric appliance from the NFC tag; and a controller which receives the information related to the small electric appliance from the NFC reader, identifies a position of the small electric appliance and the small electric appliance on the basis of the information related to the small electric appliance, transmits wireless power to the small electric appliance through the inductive coupling element corresponding to the identified position, and turns off the NFC reader when transmitting the wireless power to the small electric appliance.

According to the embodiment, in the WPT cooktop device, during wireless power transmission, NFC communication may not be performed, so NFC communication unstable or blocked during wireless power transmission in a prior art may be prevented.

The WPT cooktop device may further include: a ZigBee communication unit which performs ZigBee communication, wherein when the controller transmits wireless power to the small electric appliance, the controller may control the ZigBee communication unit such that the ZigBee communication unit communicates with the small electric appliance on the basis of the information related to the small electric appliance.

According to the embodiment, during wireless power transmission, the WPT cooktop device may perform ZigBee communication by using the information related to the small electric appliance, and accordingly, a pairing error which may be generated during ZigBee communication may be prevented.

The WPT cooktop device may further include: the ZigBee communication unit which performs ZigBee communication, wherein when the magnitude of the wireless power transmitted to the small electric appliance exceeds a predetermined magnitude, the controller may control the ZigBee communication unit such that the ZigBee communication unit communicates with the small electric appliance on the basis of the information related to the small electric appliance.

According to the embodiment, the WPT cooktop device may perform the ZigBee communication by using the information related to the small electric appliance when the magnitude of transmitted wireless power exceeds a predetermined magnitude during wireless power transmission, and accordingly, a pairing error which may be generated during ZigBee communication may be prevented. The predetermined magnitude may be 2kW.

When the controller stops transmitting wireless power to the small electric appliance, the controller may turn on the NFC reader.

According to the embodiment, when wireless power is not transmitted to the small electric appliance, the WPT cooktop device may perform NFC communication with the small electric appliance, and thus may selectively perform the NFC communication depending on whether wireless power transmission is performed.

When a cookware is placed on the WPT cooktop device, the controller may detect the cookware and determine whether heating the cookware is selected, and may perform an induction heating operation for the cookware when heating the cookware is selected.

According to the embodiment, when the cookware is placed in a heating area, the WPT cooktop device may identify this and may perform an induction heating operation thereof.

The WPT cooktop device may further include a touch panel including touch buttons for heating on/off and temperature control.

The small electric appliance may include a wireless power reception device which receives wireless power transmitted from the inductive coupling element.

The ZigBee communication unit may transmit information for establishing the ZigBee communication on the basis of the information related to the small electric appliance to the small electric appliance.

The small electric appliance may include another ZigBee communication unit which performs ZigBee communication with a ZigBee communication unit.

The small electric appliance may include an electric kettle, a blender and a toaster.

An operation method of the wireless power transfer (WPT) cooktop device including at least one inductive coupling element, the NFC reader located in correspondence to the inductive coupling element, and the ZigBee communication unit according to the embodiment of the present disclosure includes: recognizing the near field communication (NFC) tag of the small electric appliance through the NFC reader; reading information related to the small electric appliance from the NFC tag; identifying the position of the small electric appliance and the small electric appliance on the basis of the information related to the small electric appliance; transmitting wireless power to the small electric appliance through the inductive coupling element corresponding to the identified position; and turning off the NFC reader when transmitting the wireless power to the small electric appliance.

According to the embodiment, in the operation method of the WPT cooktop device, during wireless power transmission, NFC communication may not be performed, and thus NFC communication unstable or blocked during wireless power transmission in the prior art may be prevented. The operation method of the WPT cooktop device may further include: controlling the ZigBee communication unit such that the ZigBee communication unit communicates with the small electric appliance on the basis of the information related to the small electric appliance when wireless power is transmitted to the small electric appliance.

According to the embodiment, in the operation method of the WPT cooktop device, the WPT cooktop device may perform the ZigBee communication by using the information related to the small electric appliance during wireless power transmission, and accordingly, a pairing error which may be generated during the ZigBee communication may be prevented.

The operation method may further include: controlling the ZigBee communication unit such that the ZigBee communication unit communicates with the small electric appliance on the basis of the information related to the small electric appliance when the magnitude of the wireless power transmitted to the small electric appliance exceeds a predetermined magnitude.

According to the embodiment, in the operation method of the WPT cooktop device, when the magnitude of transmitted wireless power exceeds a predetermined magnitude during wireless power transmission, the information related to the small electric appliance may be used to perform the ZigBee communication, and accordingly, a pairing error which may be generated during ZigBee communication may be prevented.

The operation method may further include: turning on the NFC reader when transmitting wireless power to the small electric appliance stops.

According to the embodiment, in the operation method of the WPT cooktop device, when wireless power is not transmitted to the small electric appliance, the WPT cooktop device may perform NFC communication with the small electric appliance, and thus may selectively perform the NFC communication depending on whether wireless power transmission is performed.

The operation method may further include: detecting a cookware when the cookware is placed on the WPT cooktop device; determining whether heating the cookware is selected; and performing an induction heating operation for the cookware when heating the cookware is selected.

According to the embodiment, in the operation method of the WPT cooktop device, when the cookware is placed in a heating area, the WPT cooktop device may identify this, and may perform an induction heating operation thereof.

### Advantageous Effects

According to the embodiment of the present disclosure, the WPT cooktop device may perform NFC communication with the small electric appliance when wireless power is not transmitted thereto, and may perform ZigBee communication with the small electric appliance when wireless power is transmitted thereto.

According to the embodiment of the present disclosure, the WPT cooktop device may communicate with the small electric appliance without experiencing a pairing error during ZigBee communication and NFC communication performance degradation during high-power wireless transmission.

### Description of Drawings

FIG. 1 is a view illustrating a WPT cooktop device and a small electric appliance according to an embodiment of the present disclosure.
FIG. 2 is a view illustrating a top plate of the WPT cooktop device.
FIG. 3 is a block diagram of the WPT cooktop device and the small electric appliance according to the embodiment of the present disclosure.
FIGS. 4 and 5 illustrate a flowchart of the operation method of the WPT cooktop device according to the embodiment of the present disclosure.
FIG. 6 illustrates a flowchart of message when performing communication between the WPT cooktop device and the small electric appliance according to the embodiment of the present disclosure.

### Mode for Invention

Hereinbelow, the detailed embodiments of the present disclosure will be described in detail with reference to the accompanying drawings. However, the present disclosure cannot be said to be limited to the embodiments in which the spirit of the present disclosure is presented, and other embodiments which are included in other inventions degenerated by the addition, change, and deletion of other components or within the scope of the present disclosure may be easily proposed.

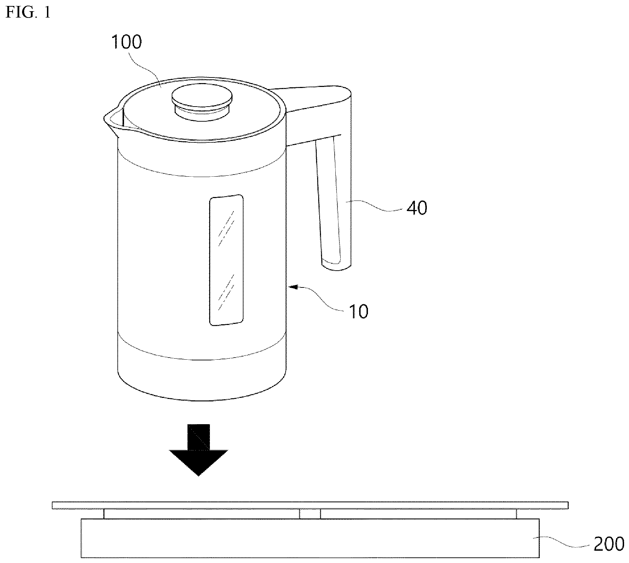

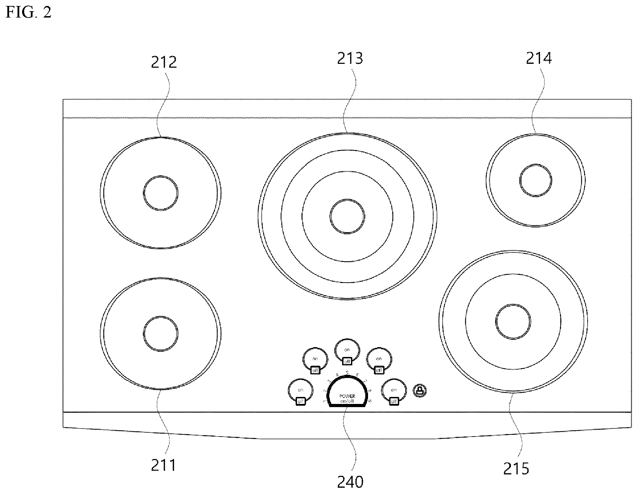

FIG. 1 is a view illustrating a WPT cooktop device and a small electric appliance according to an embodiment of the present disclosure, and FIG. 2 is a view illustrating a top plate of the WPT cooktop device. An electric kettle is illustrated as an example of the small electric appliance.

Referring to FIGS. 1 and 2, the wireless power transfer (WPT) cooktop device 200 may transmit wireless power to the small electric appliance 100. The small electric appliance 100 may receive wireless power from the WPT cooktop device 200. The WPT cooktop device 200 may communicate with the small electric appliance 100 and may receive a command and information from the small electric appliance 100. Furthermore, the WPT cooktop device 200 may receive a command or information from a server or an external device and transmit the same to the small electric appliance 100.

In addition, when a cookware is placed in a heating area of the top plate, the WPT cooktop device 200 may induce heat in the cookware.

Referring FIG. 2, a plurality of heating areas 211 to 215 in correspondence to a plurality of inductive coupling elements may be disposed on the top plate of the WPT cooktop device 200. The small electric appliance 100 or the cookware may be placed in each of the plurality of heating areas 211 to 215.

When the cookware is placed on the top plate of the WPT cooktop device 200, each of the inductive coupling elements may apply an induced current to the cookware such that heat is generated in the cookware. When the small electric appliance 100 is placed on the top plate of the WPT cooktop device 200, the inductive coupling element may transmit wireless power to the small electric appliance 100. To this end, the WPT cooktop device 200 may identify whether the cookware or the small electric appliance 100 is placed in the heating area of the top plate.

The top plate may be formed of a tempered glass material, for example, glass ceramic or ceramic silicon, and may transfer heat generated from each of the plurality of inductive coupling elements to the cookware. A touch panel 240 including a plurality of touch areas may be arranged on the top plate. For example, the touch panel may be embodied in a portion of the top plate. For example, a capacitive sensor may be installed on the top plate so as to detect a touch on the top plate. The touch panel 240 may include touch buttons, which are related to a plurality of heating areas, for heating on/off and temperature control.

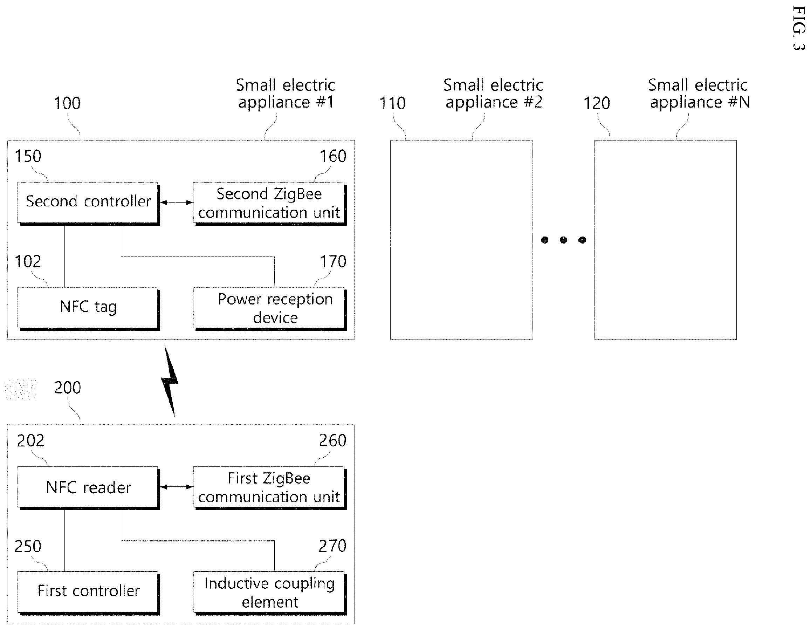

FIG. 3 is a block diagram of the WPT cooktop device and the small electric appliance according to the embodiment of the present disclosure.

Referring to FIG. 3, the small electric appliance 100 may include an electric kettle, a blender, and a toaster. The small electric appliance 100 may receive wireless power from the WPT cooktop device 200. Additionally, the small electric appliance 100 may communicate with the WPT cooktop device 200. Another small electric appliance 110 or 120 in addition to the small electric appliance 100 may be located on the WPT cooktop device 200. The WPT cooktop device 200 is required to identify a small electric appliance with which the WPT cooktop device 200 intends to communicate.

The associated small electric appliance 100 and the cooktop device 200 may communicate with each other, and thus the small electric appliance 100 may provide the amount of required power and the magnitude of supplied power to the cooktop device 200. The cooktop device 200 may provide wireless power suitable for the small electric appliance 100 on the basis of the amount of required power or the magnitude of supplied power.

In addition, the small electric appliance 100 and the cooktop device 200 may communicate with each other, and thus the cooktop device 200 may provide the updated data information of software or an application related to the small electric appliance 100 and the failure information of the small electric appliance 100 received from an external server to small electric appliance 100. The small electric appliance 100 may receive the updated data of the software and may update software thereof.

In order to avoid magnetic field interference due to wireless power transmission, the WPT cooktop device 200 may perform ZigBee communication with the small electric appliance 100 in a section in which wireless power is transmitted to the small electric appliance 100. That is, the WPT cooktop device 200 may not perform NFC communication with the small electric appliance 100 in a section in which wireless power is transmitted to the small electric appliance.

In addition, in order to avoid a pairing error of ZigBee communication, before performing the ZigBee communication, the WPT cooktop device 200 may transmit information for establishing the ZigBee communication to the small electric appliance 100.

The WPT cooktop device 200 may include an NFC reader 202, a first controller 250, a first ZigBee communication unit 260, and an inductive coupling element 270. Additionally, the small electric appliance 100 may include the NFC tag 102, a second controller 150, a second ZigBee communication unit 160, and a power reception device 170.

The inductive coupling element 270 of the WPT cooktop device 200 may include coils of wire. When a current is applied to the coils of wire, a magnetic field may be generated therein. This may cause wireless power to be transmitted to the small electric appliance 100 and may cause heat to be generated in the cookware.

In other words, when the small electric appliance 100 is located on the WPT cooktop device 200, the inductive coupling element 270 may transmit wireless power to the small electric appliance 100. When the cookware is located on the WPT cooktop device 200, the inductive coupling element 270 may allow heat to be generated in the cookware.

The NFC reader 202 of the WPT cooktop device 200 may read information from the NFC tag 102 when the NFC tag 102 of the small electric appliance 100 approaches the NFC reader. For example, the NFC reader 202 may generate a magnetic field, and when the NFC tag 102 approaches the NFC reader 202, an induced current may be generated in the coils of the NFC tag 102. The NFC tag 102 may use this current as power and may transmit data to the NFC reader 202. Such an NFC communication technology is obvious to those skilled in the art, so a detailed description thereof will be omitted.

When the small electric appliance 100 is placed on the top plate, the NFC reader 202 may read the information related to the small electric appliance 100 from the NFC tag 102 of the small electric appliance 100. The information related to the small electric appliance 100 may include the identification information of the small electric appliance 100 (for example, ID), the type of the small electric appliance 100, and power used by the small electric appliance, etc.

The NFC reader 202 may provide the information related to the small electric appliance 100 read from the NFC tag 102 of the small electric appliance 100 to the first controller 250 of the WPT cooktop device 200.

In addition, since the NFC tag 102 of the small electric appliance 100 is read by the NFC reader 202 corresponding to a heating area in which the small electric appliance 100 is placed, the first controller 250 may identify in which heating area of the top plate the small electric appliance 100 is located.

When the first controller 250 of the WPT cooktop device 200 identifies the small electric appliance 100 and the heating area in which the small electric appliance 100 is placed, the first controller 250 may transmit wireless power to the small electric appliance 100 through the inductive coupling element 270. The inductive coupling element 270 may transmit wireless power to the small electric appliance 100 according to the control of the first controller 250.

When the inductive coupling element 270 transmits wireless power, the power reception device 170 of the small electric appliance 100 may receive the wireless power. The power reception device 170 of the small electric appliance 100 may include a coil for power reception. Energy may be transmitted by an electromagnetic field formed by the inductive coupling element 270. The power reception device 170 of the small electric appliance 100 may receive energy.

According to the embodiment, when transmitting wireless power to the small electric appliance 100, the first controller 250 of the WPT cooktop device 200 may turn off or deactivate the NFC reader 202. According to another embodiment, when the magnitude of wireless power transmitted to the small electric appliance 100 exceeds a predetermined magnitude, the first controller 250 of the WPT cooktop device 200 may turn off or deactivate the NFC reader 202. For example, the predetermined magnitude of wireless power may be 2kW. Accordingly, when wireless power is transmitted to the small electric appliance 100, or when the magnitude of wireless power exceeds a predetermined magnitude, the first controller 250 of the WPT cooktop device 200 may turn off the NFC reader 202 such that NFC communication is not affected by the transmitted wireless power.

The first controller 250 may activate the first ZigBee communication unit 260 after deactivating the NFC reader 202, and may cause the first ZigBee communication unit 260 to communicate with the second ZigBee communication unit 160 of the small electric appliance 100.

The first controller 250 may receive and store the information related to the small electric appliance 100 from the NFC reader 202. When the first controller 250 activates the first ZigBee communication unit 260, the first controller 250 may provide the information related to the small electric appliance 100 to the first ZigBee communication unit 260.

After receiving the information related to the small electric appliance 100 from the first controller 250, the first ZigBee communication unit 260 may establish a communication channel with the second ZigBee communication unit 160 of the small electric appliance 100 by using the information related to the small electric appliance 100. Specifically, the first ZigBee communication unit 260 may request the second ZigBee communication unit 160 for ZigBee communication by using the identification information of the small electric appliance 100. The second ZigBee communication unit 160 may identify the small electric appliance 100 through the identification information of the small electric appliance 100, and accordingly, a pairing error during ZigBee communication of a prior WPT cooktop device may be prevented.

That is, the second ZigBee communication unit 160 of the small electric appliance 100 may receive a communication request from the first ZigBee communication unit 260 of the WPT cooktop device 200 and may communicate with the first ZigBee communication unit 260 according to the ZigBee communication method.

Meanwhile, when transmitting wireless power to the small electric appliance 100 stops or wireless power is no longer transmitted to the small electric appliance 100, the first controller 250 may activate the NFC reader 202 such that the NFC reader can read the NFC tag 102 of the small electric appliance 100 placed in an associated heating area.

According to whether or not wireless power is transmitted to the small electric appliance 100, the first controller 250 of the WPT cooktop device 200 may switch the turning on/off of the NFC reader 202.

Accordingly, the WPT cooktop device 200 may perform NFC communication with the small electric appliance 100 when wireless power is not transmitted thereto, and may perform ZigBee communication with the small electric appliance 100 when wireless power is transmitted thereto. Accordingly, the WPT cooktop device 200 may communicate with the small electric appliance 100 without experiencing a pairing error during ZigBee communication and NFC communication performance degradation during high-power wireless transmission.

When the cookware is placed on a heating area of the top plate, the first controller 250 may detect the cookware and the heating area in which the cookware is placed by detecting a change in impedance of the top plate.

For example, a user may select heating the cookware through the touch panel 240. When heating the cookware is selected by a user or due to a certain condition, the first controller 250 may allow a current to flow to the inductive coupling element 270 and may perform an induction heating (IH) operation. The first controller 250 may stop heating the cookware by the selection of a user or when a predetermined condition is satisfied.

Meanwhile, the WPT cooktop device 200 may include a plurality of heating areas. At least two small electric appliances or at least two pieces of cookware may be placed in at least two heating areas, respectively. Accordingly, the WPT cooktop device 200 may include the inductive coupling element, the NFC reader, and the first ZigBee communication unit 260 for each of the plurality of heating areas.

Accordingly, the WPT cooktop device 200 illustrated in FIG. 3 is only an example of the present disclosure, and components of the WPT cooktop device 200 corresponding to the plurality of heating areas are obvious to those skilled in the art.

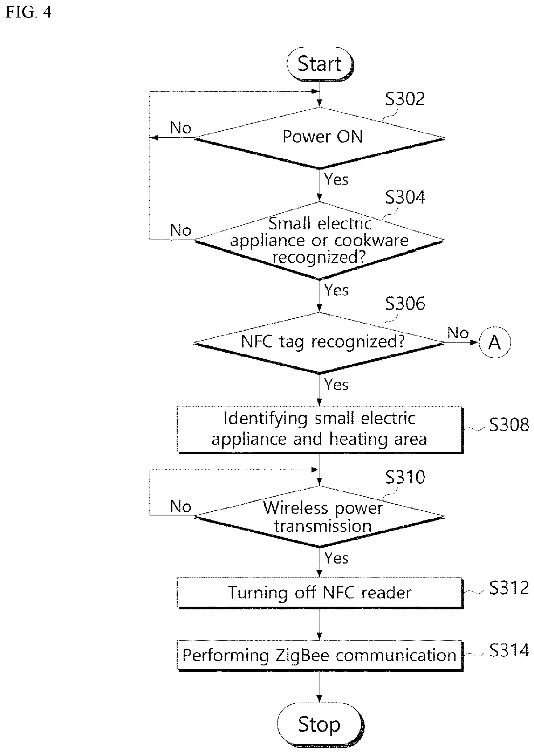

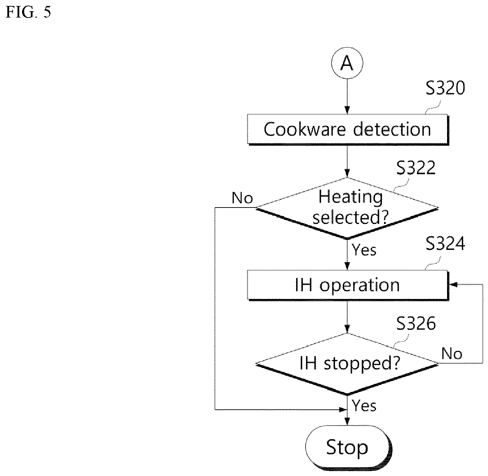

FIGS. 4 and 5 illustrate a flowchart of the operation method of the WPT cooktop device according to the embodiment of the present disclosure.

Referring to FIGS. 4 and 5, it may be determined whether the WPT cooktop device 200 is powered on at step S302. When the WPT cooktop device 200 is powered on, it may be detected whether the WPT cooktop device 200 recognizes the small electric appliance or the cookware at step S304. When the small electric appliance or the cookware is placed on the top plate, impedance may change in a portion of the top plate in which the small electric appliance or the cookware is placed, so the WPT cooktop device 200 may recognize the small electric appliance or the cookware.

After recognizing the small electric appliance or the cookware, it may be determined whether the WPT cooktop device 200 recognizes the NFC tag 102 of the small electric appliance 100 at step S306. As described above, when the NFC tag 102 of the small electric appliance 100 approaches the NFC reader 202, the NFC reader 202 of the WPT cooktop device 200 may read information related to the small electric appliance 100 from the NFC tag 102.

The WPT cooktop device 200 may identify in which heating area of the top plate the small electric appliance 100 is located at step S308. Since the NFC reader 202 corresponding to a heating area in which the small electric appliance 100 is placed reads the NFC tag 102 of the small electric appliance 100, the WPT cooktop device 200 may identify the small electric appliance 100 and the associated heating area.

Continuously, it may be determined whether the WPT cooktop device 200 transmits wireless power to the small electric appliance 100 at step S310. According to the another embodiment, it may be determined whether the magnitude of wireless power which the WPT cooktop device 200 transmits to the small electric appliance 100 exceeds a predetermined magnitude.

After the WPT cooktop device 200 transmits wireless power to the small electric appliance 100, the WPT cooktop device 200 may turn off the NFC reader 202 at step S312. According to the another embodiment, when the magnitude of the transmitted wireless power exceeds a predetermined magnitude, the WPT cooktop device 200 may turn off the NFC reader 202.

The WPT cooktop device 200 may turn off the NFC reader 202, and then may perform ZigBee communication with the small electric appliance 100 at step S314. For example, after turning off the NFC reader 202, the WPT cooktop device 200 may activate the first ZigBee communication unit 260, and may cause the first ZigBee communication unit 260 to communicate with the small electric appliance 100.

The WPT cooktop device 200 may receive and store the information related to the small electric appliance 100 from the NFC reader 202. When activating the first ZigBee communication unit 260, the WPT cooktop device 200 may establish a communication channel with the small electric appliance 100 by using the information related to the small electric appliance 100.

That is, the small electric appliance 100 may receive a communication request from the WPT cooktop device 200 and may communicate with the WPT cooktop device 200 according to the ZigBee communication method.

Meanwhile, when transmitting wireless power to the small electric appliance 100 stops or wireless power is no longer transmitted to the small electric appliance 100, the first controller 250 may turn on or activate the NFC reader 202 such that the NFC reader can read the NFC tag 102 of the small electric appliance 100 placed in an associated heating area.

That is, according to whether or not wireless power is transmitted to the small electric appliance 100, the WPT cooktop device 200 may switch the turning on/off of the NFC reader 202.

Accordingly, the WPT cooktop device 200 may perform NFC communication with the small electric appliance 100 when wireless power is not transmitted thereto, and may perform ZigBee communication with the small electric appliance 100 when wireless power is transmitted thereto. Accordingly, the WPT cooktop device 200 may communicate with the small electric appliance 100 without experiencing a pairing error during ZigBee communication and NFC communication performance degradation during high-power wireless transmission.

Meanwhile, when the WPT cooktop device 200 does not recognize the NFC tag 102 at step S306, the WPT cooktop device 200 may detect the cookware at step S320 of FIG. 5. The detection of the cookware may include identification of the size or type of the cookware. After detecting the cookware, the WPT cooktop device 200 may determine whether heating the cookware is selected at step S322. When heating the cookware is selected by a user or due to a certain condition, the WPT cooktop device 200 may allow a current to flow to the inductive coupling element 270 and may perform an induction heating (IH) operation at step S324. Continuously, the WPT cooktop device 200 may stop heating the cookware by a user's selection or when a predetermined condition is satisfied at step S326.

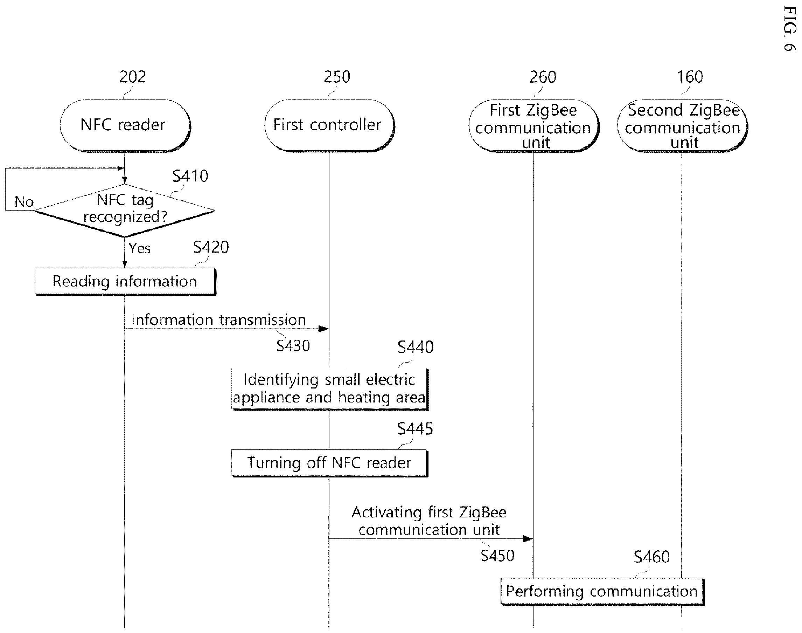

FIG. 6 illustrates a flowchart of message when performing communication between the WPT cooktop device and the small electric appliance according to the embodiment of the present disclosure.

Referring to FIG. 6, first, it may be determined whether the NFC reader 202 of the WPT cooktop device 200 recognizes the NFC tag 102 of the small electric appliance 100 at step S410. When recognizing the NFC tag 102, the NFC reader 202 may read the information related to the small electric appliance 100 from the NFC tag 102 at step S420. The NFC reader 202 may transmit the read information to the first controller 250 of the WPT cooktop device 200 at step S430.

When the first controller 250 receives the information related to the small electric appliance 100 from the NFC reader 202, the first controller 250 may identify the small electric appliance and an associated heating area at step S440. As described above, since the NFC reader 202 corresponding to the heating area in which the small electric appliance 100 is placed reads the NFC tag 102 of the small electric appliance 100, the first controller 250 may identify in which heating area of the top plate the small electric appliance 100 is located.

When identifying the small electric appliance 100 and the heating area in which the small electric appliance 100 is placed, the first controller 250 may transmit wireless power to the small electric appliance 100 through the inductive coupling element 270.

When transmitting wireless power to the small electric appliance 100, the first controller 250 may turn off or deactivate the NFC reader 202 at step 445. According to the another embodiment, when the magnitude of wireless power transmitted to the small electric appliance 100 exceeds a predetermined magnitude, the first controller 250 of the WPT cooktop device 200 may turn off or deactivate the NFC reader 202. For example, the predetermined magnitude may be 2kW.

After deactivating the NFC reader 202, the first controller 250 may activate the first ZigBee communication unit 260 at step S450 and may cause the first ZigBee communication unit 260 to communicate with the second ZigBee communication unit 160 of the small electric appliance 100.

The first controller 250 may receive and store the information related to the small electric appliance 100 from the NFC reader 202. When activating the first ZigBee communication unit 260, the first controller 250 may provide the information related to the small electric appliance 100 to the first ZigBee communication unit 260.

After receiving the information related to the small electric appliance 100 from the first controller 250, the first ZigBee communication unit 260 may establish a communication channel with the second ZigBee communication unit 160 of the small electric appliance 100 by using the information related to the small electric appliance 100 at step S460.

That is, the second ZigBee communication unit 160 of the small electric appliance 100 may receive a communication request from the first ZigBee communication unit 260 of the WPT cooktop device 200 and may communicate with the first ZigBee communication unit 260 according to the ZigBee communication method.

Although the embodiments of the present disclosure have been described with reference to the accompanying drawings, the present disclosure is not limited to the above embodiments and may be manufactured in various different forms. Those skilled in the art to which the present disclosure belongs will be able to understand that the present disclosure may be embodied in other specific forms without changing the technical idea or essential characteristics of the present disclosure. Therefore, it should be understood that the embodiments described above are illustrative in all respects and not restrictive.

## Claims

1. A wireless power transfer (WPT) cooktop device (200) **characterized in that** the device (200) comprises:
at least one inductive coupling element (270) comprising coils of wire which generate a magnetic field when a current is applied thereto;
an NFC reader (202) which is located in correspondence to the inductive coupling element (270), recognizes a near field communication (NFC) tag (102) of a small electric appliance (100), and reads information related to the small electric appliance (100) from the NFC tag (102); and
a controller (250) which receives the information related to the small electric appliance (100) from the NFC reader (202), identifies a position of the small electric appliance (100) and the small electric appliance (100) on the basis of the information related to the small electric appliance (100), transmits wireless power to the small electric appliance (100) through the inductive coupling element (270) corresponding to the identified position, and turns off the NFC reader (202) when transmitting the wireless power to the small electric appliance (100).

2. The device (200) of claim 1, **characterized in that** the device (200) further comprises:
a ZigBee communication unit (260) which performs ZigBee communication,
wherein when the controller (250) transmits wireless power to the small electric appliance (100), the controller (250) controls the ZigBee communication unit (260) such that the ZigBee communication unit (260) communicates with the small electric appliance (100) on the basis of the information related to the small electric appliance (100).

3. The device (200) of claim 1, **characterized in that** the device (200) further comprises:
a ZigBee communication unit (260) which performs ZigBee communication,
wherein when a magnitude of the wireless power transmitted to the small electric appliance (100) exceeds a predetermined magnitude, the controller (250) controls the ZigBee communication unit (260) such that the ZigBee communication unit (260) communicates with the small electric appliance (100) on the basis of the information related to the small electric appliance (100).

4. The device (200) of claim 1, **characterized in that** when the controller (250) stops transmitting wireless power to the small electric appliance (100), the controller (250) turns on the NFC reader (202).

5. The device (200) of claim 1, **characterized in that** when a cookware is placed on the WPT cooktop device (200), the controller (250) detects the cookware and determines whether heating the cookware is selected, and performs an induction heating operation for the cookware when heating the cookware is selected.

6. The device (200) of claim 1, **characterized in that** the small electric appliance (100) comprises a wireless power reception device which receives wireless power transmitted from the inductive coupling element (270).

7. The device (200) of claim 2, **characterized in that** the ZigBee communication unit (260) transmits information for establishing the ZigBee communication on the basis of the information related to the small electric appliance (100) to the small electric appliance (100).

8. The device (200) of claim 1, **characterized in that** the small electric appliance (100) comprises another ZigBee communication unit (160) which performs ZigBee communication with a ZigBee communication unit (260).

9. The device (200) of claim 1, **characterized in that** the information related to the small electric appliance (100) comprises identification information of the small electric appliance (100), a type of the small electric appliance (100), or power used by the small electric appliance (100).

10. An operation method of a wireless power transfer (WPT) cooktop device (200) comprising at least one inductive coupling element (270), an NFC reader (202) located in correspondence to the inductive coupling element (270), and a ZigBee communication unit (260), **characterized in that** the method comprises:
recognizing a near field communication (NFC) tag (102) of a small electric appliance (100) through the NFC reader (202);
reading information related to the small electric appliance (100) from the NFC tag (102);
identifying a position of the small electric appliance (100) and the small electric appliance (100) on the basis of the information related to the small electric appliance (100);
transmitting wireless power to the small electric appliance (100) through the inductive coupling element (270) corresponding to the identified position; and
turning off the NFC reader (202) when transmitting the wireless power to the small electric appliance (100).

11. The method of claim 10, **characterized in that** the method further comprises:
controlling the ZigBee communication unit (260) such that the ZigBee communication unit (260) communicates with the small electric appliance (100) on the basis of the information related to the small electric appliance (100) when wireless power is transmitted to the small electric appliance (100).

12. The method of claim 10, **characterized in that** the method further comprises:
controlling the ZigBee communication unit (260) such that the ZigBee communication unit (260) communicates with the small electric appliance (100) on the basis of the information related to the small electric appliance (100) when a magnitude of the wireless power transmitted to the small electric appliance (100) exceeds a predetermined magnitude.

13. The method of claim 11, **characterized in that** the method further comprises:
turning on the NFC reader (202) when transmitting wireless power to the small electric appliance (100) stops.

14. The method of claim 10, **characterized in that** the method further comprises:
detecting a cookware when the cookware is placed on the WPT cooktop device (200);
determining whether heating the cookware is selected; and
performing an induction heating operation for the cookware when heating the cookware is selected.

15. The method of claim 10, **characterized in that** the information related to the small electric appliance (100) comprises identification information of the small electric appliance (100), a type of the small electric appliance (100), or power used by the small electric appliance (100).
